Europäisches Patentamt

European Patent Office

Office européen des brevets

(19)

(11) Publication number: **0 090 053**

**B1**

## (12) EUROPEAN PATENT SPECIFICATION

(45) Date of publication of patent specification: **24.06.87**

(51) Int. Cl.⁴: **G 11 B 5/716**

(21) Application number: **82902835.6**

(22) Date of filing: **27.09.82**

(86) International application number:
**PCT/JP82/00390**

(87) International publication number:
**WO 83/01145 31.03.83 Gazette 83/08**

(54) **MAGNETIC RECORDING MEDIUM.**

(30) Priority: **28.09.81 JP 153299/81**
**28.09.81 JP 153300/81**

(43) Date of publication of application:
**05.10.83 Bulletin 83/40**

(45) Publication of the grant of the patent:
**24.06.87 Bulletin 87/26**

(84) Designated Contracting States:
**FR**

(56) References cited:
**DE-A-2 309 159**
**DE-A-2 507 975**
**DE-A-2 615 961**
**GB-A-2 042 370**
**JP-A-52 051 908**
**JP-A-54 021 304**
**JP-A-54 048 504**
**JP-B-52 028 364**
**JP-B-56 030 608**

(73) Proprietor: **SONY CORPORATION**
**7-35 Kitashinagawa 6-Chome Shinagawa-ku**
**Tokyo 141 (JP)**

(72) Inventor: **KUBOTA, Isao Sony Corporation**
**7-35, Kitashinagawa 6-chome Shinagawa-ku**
**Tokyo 141 (JP)**

(74) Representative: **Thomas, Christopher Hugo**
**et al**
**D Young & Co 10 Staple Inn**
**London WC1V 7RD (GB)**

Courier Press, Leamington Spa, England.

0 090 053

**Description**

This invention relates to magnetic recording media.

A prior art magnetic recording medium, for example, a magnetic tape with magnetic powder, such as, gamma-Fe$_2$O$_3$ coated on the surface thereof (the specific surface area of the magnetic powder being about 20 m$^2$/g) has a large coercive force and residual magnetic flux density, achieves a high reproduced output over the whole frequency band range, but has the defect that the bias noise is significant.

We have found that in a magnetic recording medium, if an iron oxide magnetic powder having a large specific surface area is distributed in the surface part of its magnetic layer, bias noise is reduced, and if an iron oxide-based magnetic powder having a small specific surface area is distributed in the inner part of the magnetic layer (that is, inward of the middle of the magnetic layer in the thickness direction), the reproduced output is increased over the whole frequency band range.

According to the present invention, therefore, there is provided a magnetic recording medium having a non-magnetic base, a first magnetic layer formed on said base and a second magnetic layer formed on said first magnetic layer, characterised in that said first magnetic layer is formed by coating binder containing an iron oxide-based magnetic powder the specific surface area of which powder according to the BET adsorption method is in a range from 18 to 25 m$^2$/g and the coercive force H$_{c1}$ of which layer is in a range from 19894 to 31831 A/m (250 to 400 oersteds), and the residual magnetic flux density Br of which layer is in a range from 0.16 to 0.2 telsa (1600 to 2000 gauss), in that said second magnetic layer is formed by coating binder containing an iron oxide-based magnetic powder the specific surface area of which powder according to the BET absorption method is 28 m$^2$/g or above, and the coercive force H$_{c2}$ of which layer is in a range from 19894 to 71619 A/m (250 to 900 oersteds), and in that the coercive force H$_{c1}$ is less than the coercive force H$_{c2}$.

The invention will now be described by way of example with reference to the accompanying drawings, throughout which like parts are referred to by like references, and in which:

Figure 1 is an enlarged cross-sectional view of a prior art magnetic recording medium;
Figure 2 is an enlarged cross-sectional view of an embodiment of magnetic recording medium according to this invention;
Figures 3A and 3B are tables for indicating characteristics of respective examples of a single-layer magnetic recording medium; and
Figures 4A and 4B are tables for indicating characteristics of respective examples of a double-layer magnetic recording medium according to this invention.

The magnetic recording media according to this invention will now be described in detail with reference to examples employing gamma-Fe$_2$O$_3$ magnetic powder as an iron oxide-based magnetic powder. In the description which follows the specific surface area of the magnetic powder is the specific surface area as measured by the BET adsorption method.

Examples
1. 
| | |
|---|---|
| gamma-Fe$_2$O$_3$ magnetic powder having a specific surface area of 20 m$^2$/g and a coercive force of 25465 A/m (320 Oe) | 400 parts by weight |
| thermoplastic polyurethane resin (ESTAN 5702 (trade name), manufactured by B F GOODRICH CORP.) | 50 parts by weight |
| vinyl-chloride-vinyl acetate copolymer (VAGH (trade name), manufactured by UCC CORP) | 50 parts by weight |
| lecithin | 4 parts by weight |
| methyl ethyl ketone | 700 parts by weight |
| cyclohexanone | 50 parts by weight |

These components are mixed together and dispersed in a ball mill for twenty-four hours. After that, 20 parts by weight of polyisocyanate (DESMODUR (Registered Trade Mark) L-75, manufactured by BAYER AG) is added thereto and then dispersed by high speed shear mixing for two hours thereby to produce magnetic paint. This is called magnetic paint A.

2

0 090 053

| | 2. | gamma-Fe$_2$O$_3$ magnetic powder having a specific surface area of 20 m$^2$/g and a coercive force of 25465 A/m (320 Oe) | 400 parts by weight |

2. gamma-Fe$_2$O$_3$ magnetic powder having a specific surface area of 20 m$^2$/g and a coercive force of 25465 A/m (320 Oe) — 400 parts by weight

thermoplastic polyurethane resin — 33.3 parts by weight

vinyl-chloride vinyl acetate copolymer — 33.3 parts by weight

lecithin — 4 parts by weight

methyl ethyl ketone — 650 parts by weight

cyclohexanone — 50 parts by weight

These components are mixed together and then treated by the same process as the magnetic paint A of the first example thereby to produce magnetic paint. This is called magnetic paint B.

3. gamma-Fe$_2$O$_3$ magnetic powder having a specific surface area of 20 m$^2$/g and a coercive force of 25465 A/m (320 Oe) — 400 parts by weight

thermoplastic polyurethane resin — 25 parts by weight

vinyl-chloride-vinyl acetate copolymer — 25 parts by weight

lecithin — 4 parts by weight

methyl ethyl ketone — 625 parts by weight

cyclohexanone — 50 parts by weight

These components are mixed together and then treated by the same process as the magnetic paint A of the first example thereby to produce magnetic paint. This is called magnetic paint C.

4. The gamma-Fe$_2$O$_3$ magnetic powder employed in the magnetic paint C in the third example is replaced by gamma-Fe$_2$O$_3$ magnetic powder having a specific surface area 20 m$^2$/g and a coercive force 33423 A/m (420 Oe) (the other components are the same) and magnetic paint is obtained by the same process as the magnetic paint A of the first example. This is called magnetic paint D.

5. The gamma-Fe$_2$O$_3$ magnetic powder employed in the magnetic paint C in the third example is replaced by gamma-Fe$_2$O$_3$ magnetic powders having a specific surface area 30 m$^2$/g and coercive forces of 25465 A/m, 33423 A/m and 41380 A/m (320 Oe, 420 Oe and 520 Oe) respectively (the other components are the same) and magnetic paints are obtained by the same process as the magnetic paint A of the first example. These are called magnetic paints E, F and G respectively.

6. The gamma-Fe$_2$O$_3$ magnetic powder employed in the magnetic paint A in the first example is replaced by gamma-Fe$_2$O$_3$ magnetic powders having a specific surface area 40 m$^2$/g and coercive forces of 25465 A/m, 33423 A/m and 41380 A/m (320 Oe, 420 Oe and 520 Oe) respectively (the other components are the same) and magnetic paints are obtained by the same process as the magnetic paint A. These are called magnetic paints H, I and J, respectively.

7. The gamma-Fe$_2$O$_3$ magnetic powder employed in the magnetic paint C in the third example is replaced by Co-deposition type gamma-Fe$_2$O$_3$ magnetic powders having a specific surface area 30 m$^2$/g and coercive forces of 41380 A/m, 57296 A/m and 73211 A/m (520 Oe, 720 Oe and 920 Oe) respectively (the other components are the same) and magnetic paints are obtained by the same process as the magnetic paint A in the first example. These are called magnetic paints K, L and M, respectively.

8. The gamma-Fe$_2$O$_3$ magnetic powder employed in the magnetic paint C in the third example is replaced by Co-deposition type gamma-Fe$_2$O$_3$ magnetic powders having a specific surface area 40 m$^2$/g and coercive forces of 41380 A/m, 57296 A/m and 73211 A/m (520 Oe, 720 Oe and 920 Oe) respectively (the other components are the same) and magnetic paints are obtained by the same process as the magnetic paint A. These are called magnetic paints N, O and P, respectively.

The characteristics of the magnetic paints A to P are indicated in the table below, in which P/B represents the ratio of the amount of magnetic powder P in weight to the amount of binder B in weight.

3

| Magnetic paint | Coercive force $H_c$ of magnetic powder | Specific surface area | P/B |
|---|---|---|---|
| A | 25465 A/m (320 Oe) | 20 m²/g | 4 |
| B | 25465 A/m (320 Oe) | 20 m²/g | 6 |
| C | 25465 A/m (320 Oe) | 20 m²/g | 8 |
| D | 33423 A/m (420 Oe) | 20 m²/g | 8 |
| E | 25465 A/m (320 Oe) | 30 m²/g | 8 |
| F | 33423 A/m (420 Oe) | 30 m²/g | 8 |
| G | 41380 A/m (520 Oe) | 30 m²/g | 8 |
| H | 25465 A/m (320 Oe) | 40 m²/g | 4 |
| I | 33423 A/m (420 Oe) | 40 m²/g | 4 |
| J | 41380 A/m (520 Oe) | 40 m²/g | 4 |
| K | 41380 A/m (520 Oe) | 30 m²/g | 8 |
| L | 57296 A/m (720 Oe) | 30 m²/g | 8 |
| M | 73211 A/m (920 Oe) | 30 m²/g | 8 |
| N | 41380 A/m (520 Oe) | 40 m²/g | 8 |
| O | 57296 A/m (720 Oe) | 40 m²/g | 8 |
| P | 73211 A/m (920 Oe) | 40 m²/g | 8 |

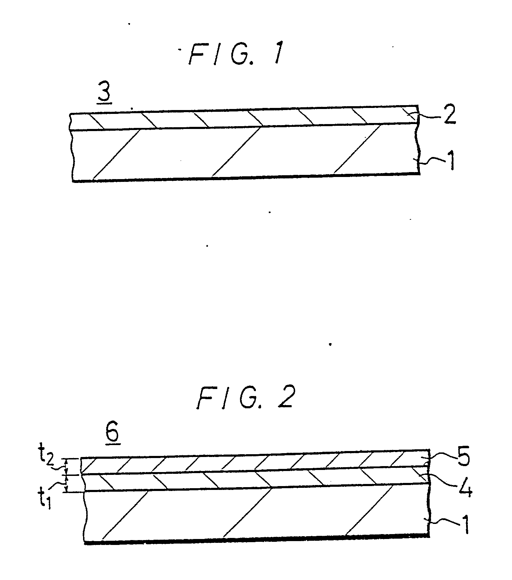

Thus, using the magnetic paints A to P, as shown in Figure 1, the magnetic paints are coated on a non-magnetic base (for example, a polyethylene terephthalate film having a thickness of 12 μm) 1, which is then subjected to a magnetic orientation treatment. After being dried, it is subjected to a super calender roll treatment to form a magnetic recording medium 3 having a single magnetic layer 2.

As shown in Figure 2, the same magnetic paints A to P are employed to form a first magnetic layer (under layer) 4 in the same process as described above and after the first magnetic layer 4 has been sufficiently hardened, a second magnetic layer (upper layer) 5 is formed by the same process as described above to form a double-layer magnetic recording medium 6 according to this invention.

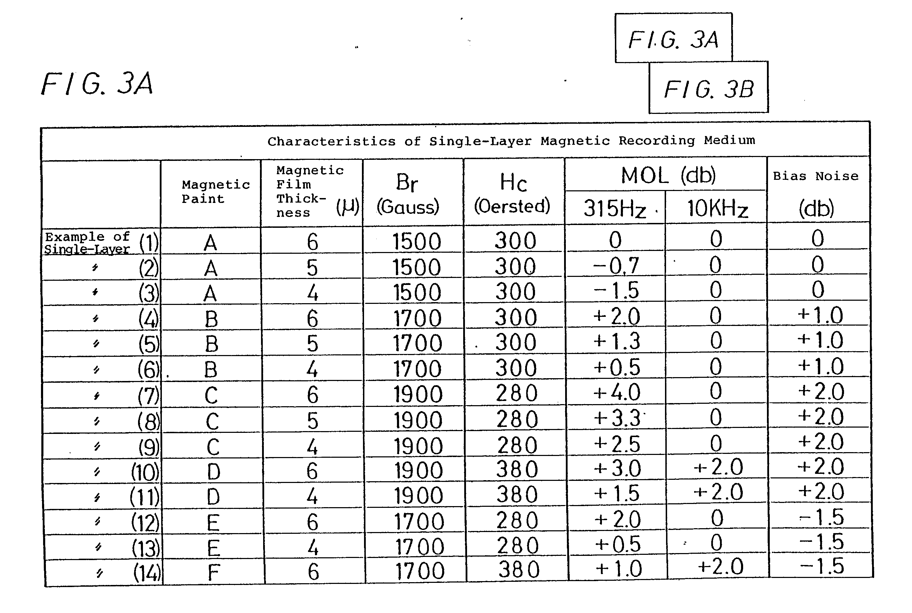

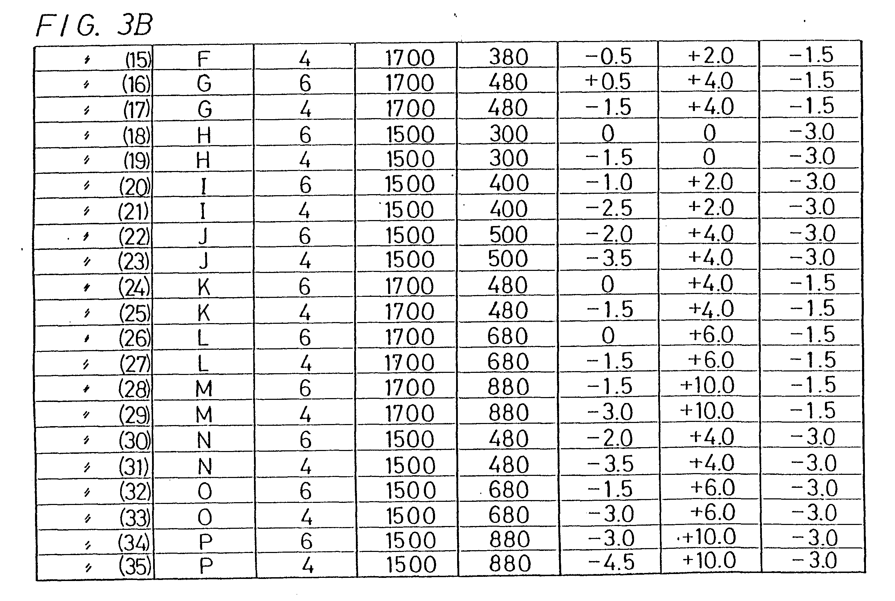

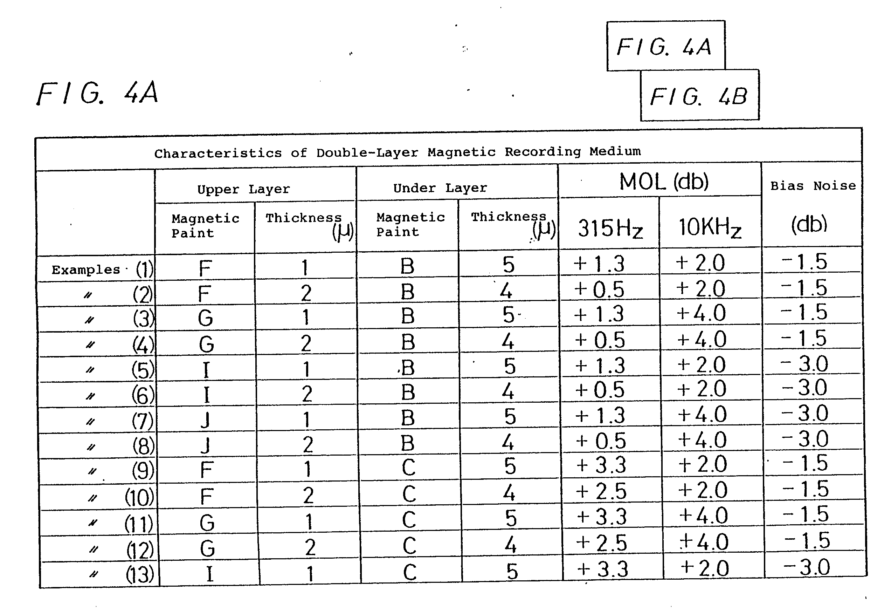

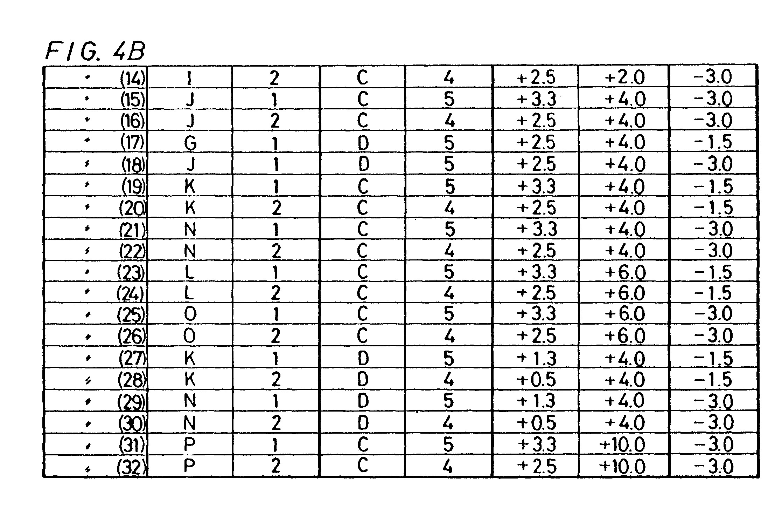

Magnetic characteristics (residual magnetic flux density Br and coercive force $H_c$), reproduced outputs (MOLs), bias noise and so on of the magnetic recording media 3 and 6 formed as described above were measured. The results thereof are indicated in Figures 3A, 3B, 4A and 4B.

Figures 3A and 3B indicate the characteristics of the magnetic recording medium 3 having the single magnetic layer 2 made of the respective magnetic paints A to P (single-layer examples 1 to 35) and Figures 4A and 4B indicate the characteristics of the double-layer magnetic recording medium 6 according to the present invention (examples 1 to 32 according to this invention).

The magnetic recording medium (magnetic tape) used in the measurements is an audio tape cut 1/8-inch (roughly 3 mm) wide. The measuring method for each characteristic is as follows.

1. The residual magnetic flux density Br is the residual magnetic flux density measured at an external magnetic field of 159155 A/m (2000 Oe) and the unit thereof is gauss.

2. The coervice force $H_c$ is the coercive force measured at an external magnetic field of 159155 A/m (2000 Oe) and the unit thereof is oersted (Oe).

3. The MOL (maximum output level: reproduced output) is measured at a reference frequency (315 Hz) and a high frequency (10 kHz). The former is the output level at which the output signal with the frequency of 315 Hz has a distortion of 3%, while the latter is the maximum saturation output level of a signal with the frequency of 10 kHz.

4. The bias noise is a noise when an auditory sense correction filter A (JIS) is utilized and the unit thereof is decibel (db).

5. The tape speed is 4.8 cm/sec.

The MOLs (315 Hz and 10 kHz) and the bias noise are indicated by a relative value (db) which takes the single-layer example 1 in Figure 3A as a reference (0 db).

# 0 090 053

Figures 3A, 3B, 4A and 4B reveal that the double-layer magnetic recording medium 6 according to this invention in which the specific surface area of the magnetic powder forming the second magnetic layer 5 as the upper layer is selected larger than that of the first magnetic layer 4 as the under layer produces a high reproduced output over the whole of low and high frequency band ranges and reduces the bias noise considerably as compared with the prior art single-layer magnetic recording medium 3.

The specific surface area of the iron oxide-based magnetic powder forming the first magnetic layer 4 as the under layer is preferably selected to be about 20 $m^2/g$ (18 to 25 $m^2/g$). If it is out of this range, the reproduced output of the low frequency band is lowered. The specific surface area of the iron oxide-based magnetic powder forming the second magnetic layer 5 as the upper layer is selected to be 28 $m^2/g$ or above, more preferably in a range from 28 to 45 $m^2/g$. If it is out of this range, the bias noise cannot be reduced. The coercive force $H_{c1}$ and the residual magnetic flux density $Br_1$ of the magnetic layer 4 are selected in a range from 19894 to 31831 A/m (250 to 400 oersteds) and 0.16 to 0.2 tesla (1600 to 2000 gauss), respectively. If $Br_1$ is out of the range 0.16 to 0.2 tesla (1600 to 2000 gauss), the output of the low frequency band is lowered. The coercive force $H_{c2}$ of the second magnetic layer 5 is preferably selected in a range from 19894 to 41380 A/m (250 to 500 oersteds). Particularly when the iron oxide-based magnetic powder is employed, it is desired that the coercive force is selected in a range from 19894 to 41380 A/m (250 to 500 oersteds), or when the iron oxide-based magnetic powder having Co-compound or Fe and Co-compound coated thereon is used, it is desired that the coercive force is selected in a range from 23873 to 71619 A/m (300 to 900 oersteds). If it is out of this range, the output in the high frequency band is not increased and the recording bias and the erasing are restricted by a recording and reproducing apparatus. The optimum recording bias is determined in response to the coercive force of the magnetic layer. The coercive force $H_{c1}$ of the first magnetic layer 4 is less than the coercive force $H_{c2}$ of the second magnetic layer 5.

Also, it is preferable that the thickness of the first magnetic layer 4 is selected more than 2.0 μm but less than 6.0 μm. If the thickness thereof is less than 2.0 μm, the reproduced output in the low frequency band is decreased. If it is more than 6.0 μm, the reproduced output in only the low frequency band is increased excessively to make the balance between the low and high frequency bands poor. Moreover, the thickness of the second magnetic layer 5 is preferably selected to be in a range from 0.2 to 2.0 μm. If the thickness thereof is selected less than 0.2 μm, the bias noise cannot be reduced. If it exceeds 2.0 μm, the reproduced output in the low frequency band is decreased.

As described above, according to this invention, on the basis of the results of the characteristics of Figure 4, there is provided the magnetic recording medium 6 having the first and second magnetic layers 4 and 5 formed on the non-magnetic base 1 in turn as shown in Figure 2, in which the first magnetic layer 4 is formed by coating the iron oxide-based magnetic powder the specific surface area of which is in a range from 18 to 25 $m^2/g$ according to the BET adsorption method, the coercive force $H_{c1}$ thereof is in a range from 19894 to 31831 A/m (250 to 400 oersteds), and the residual magnetic flux density Br thereof is in a range from 0.16 to 0.2 tesla (1600 to 2000 gauss), and in which the second magnetic layer 5 is formed by coating the iron oxide-based magnetic powder the specific surface area according to the BET adsorption method of which is 28 $m^2/g$ or above, more preferably, in a range from 28 to 45 $m^2/g$ and the coercive force $H_{c2}$ thereof is in a range from 19894 to 71619 A/m (250 to 900 oersteds).

In this way it is possible to reduce the bias noise while keeping the high reproduced output over the whole frequency band range.

## Claims

1. A magnetic recording medium having a non-magnetic base, a first magnetic layer formed on said base and a second magnetic layer formed on said first magnetic layer, characterised in that said first magnetic layer is formed by coating binder containing an iron oxide-based magnetic powder the specific surface area of which powder according to the BET adsorption method is in a range from 18 to 25 $m^2/g$, and the coercive force $H_{c1}$ of which layer is in a range from 19894 to 31831 A/m (250 to 400 oersteds), and the residual magnetic flux density Br of which layer is in a range from 0.16 to 0.2 tesla (1600 to 2000 gauss), in that said second magnetic layer is formed by coating binder containing an iron oxide-based magnetic powder the specific surface area of which powder according to the BET absorption method is 28 $m^2/g$ or above, and the coercive force $H_{c2}$ of which layer is in a range from 19894 to 71619 A/m (250 to 900 oersteds), and in that the coercive force $H_{c1}$ is less than the coercive force $H_{c2}$.

2. A magnetic recording medium according to claim 1 wherein said second magnetic layer is formed by coating an iron oxide-based magnetic powder, and the coercive force $H_{c2}$ is in a range from 19894 to 39789 A/m (250 to 500 oersteds).

3. A magnetic recording medium according to claim 1 wherein said second magnetic layer is formed by coating a Co-compound deposition type magnetic powder or Fe and Co-compound deposition type iron oxide-based magnetic powder, and the coercive force $H_{c2}$ is in a range from 23873 to 71619 A/m (300 to 900 oersteds).

4. A magnetic recording medium according to claim 1 wherein the specific surface area of the magnetic powder forming said second magnetic layer according to the BET adsorption method is in a range from 28 to 45 $m^2/g$.

5

5. A magnetic recording medium according to claim 1 wherein the thickness of said first magnetic layer is in a range from 2 to 6 µm.

6. A magnetic recording medium according to claim 1 wherein the thickness of said second magnetic layer is selected in a range from 0.2 to 2 µm.

7. A magnetic recording medium according to claim 1 wherein said iron-oxide-based magnetic powder is gamma-Fe$_2$O$_3$.


**Patentansprüche**

1. Magnetisches Aufzeichnungsmedium, mit einer nichtmagnetischen Basis, einer auf der Basis ausgebildeten ersten magnetischen Schicht und eine auf der ersten magnetischen Schicht ausgebildeten zweiten magnetischen Schicht, dadurch gekennzeichnet, daß die erste magnetische Schicht durch Beschichten mit einem Bindemittel gebildet ist, das ein auf Eisenoxid basierendes magnetisches Pulver enthält, wobei die spezifische Oberfläche dieses Pulvers gemäß dem BET-Adsorptionsverfahren in einem Bereich von 16 bis 25 m$^2$/g und die Koerzitivkraft H$_{c1}$ dieser Schicht in dem Bereich von 19894 bis 31831 A/m (250 bis 400 Oersted) liegen und die Restmagnetflußdichte Br dieser Schicht in einem Bereich von 0,16 bis 0,2 Tesla (1600 bis 2000 Gauß) liegt, daß die zweite magnetische Schicht durch Beschichten mit einem Bindemittel gebildet ist, das ein auf Eisenoxid basierendes magnetisches Pulver enthält, wobei die spezifische Oberfläche dieses Pulvers gemäß den BET-Adsorptionsverfahren mindestens 28 m$^2$/g beträgt und die Koerzitivkraft H$_{c2}$ in einem Bereich von 19894 bis 71619 A/m (250 bis 900 Oersted) liegt und daß die Koerzitivkraft H$_{c1}$ kleiner als die Koerzitivkraft H$_{c2}$ ist.

2. Magnetisches Aufzeichnungsmedium nach Anspruch 1, bei dem die zweite magnetische Schicht durch Aufbringen eines auf Eisenoxid basierenden magnetischen Pulvers gebildet wird und die Koerzitivkraft H$_{c2}$ in einem Bereich von 19894 bis 39789 A/m (250 bis 500 Oersted) liegt.

3. Magnetisches Aufzeichnungsmedium nach Anspruch 1, bei dem die zweite magnetische Schicht durch Aufbringen eines Co-Gemischabscheidungs-Magnetpulvers oder eines Fe- u. Co-Gemischabscheidungs-Magnetpulvers, das auf Eisenoxid basiert, gebildet ist und die Koerzitivkraft H$_{c2}$ in einem Bereich von 23873 bis 71619 A/m (300 bis 900 Oersted) liegt.

4. Magnetisches Aufzeichnungsmedium nach Anspruch 1, bei dem die spezifische Oberfläche des magnetischen Pulvers, das die zweite magnetische Schicht bildet, gemäß dem BET-Adsorptionsverfahren in einem Bereich von 28 bis 45 m$^2$/g liegt.

5. Magnetisches Aufzeichnungsmedium nach Anspruch 1, bei dem die Dicke der ersten magnetischen Schicht in einem Bereich von 2 bis 6 µm' liegt.

6. Magnetisches Aufzeichnungsmedium nach Anspruch 1, bei dem die Dicke der zweiten magnetischen Schicht in einem Bereich von 0,2 bis 2 µm liegend gewählt ist.

7. Magnetisches Aufzeichnungsmedium nach Anspruch 1, bei dem das auf Eisenoxid basierende magnetische Pulver Gamma-Fe$_2$O$_3$ ist.


**Revendications**

1. Support d'enregistrement magnétique possédant une base non magnétique, une première couche magnétique formée sur ladite base, et une deuxième couche magnétique formée sur ladite première couche magnétique, caractérisé en ce que ladite première couche magnétique est formée par dépôt d'un agent liant contenant une poudre magnétique à base d'oxyde de fer, l'aire superficielle massique de la poudre suivant la méthode d'adsorption BET se situant dans un intervalle de 18 à 25 m$^2$/g, la force coercitive H$_{c1}$ de la couche se situant dans un intervalle de 19894 à 31831 A/m (de 250 de 400 Oe), et la densité de flux magnétique résiduelle Br de la couche se situant dans un intervalle de 0,16 à 0,2 T (de 1600 à 2000 G), en ce que ladite deuxième couche magnétique est formée par dépôt d'un agent liant contenant une poudre magnétique à base d'oxyde de fer, l'aire superficielle massique de cette poudre suivant la méthode d'absorption BET étant de 28 m$^2$/g ou plus, et la force coercitive H$_{c2}$ de cette couche se situant dans un intervalle de 19894 à 71619 A/m (de 250 à 900 Oe), et en ce que la force coercitive H$_{c1}$ est inférieure à la force coercitive H$_{c2}$.

2. Support d'enregistrement magnétique selon la revendication 1, où la deuxième couche magnétique est formée par dépôt d'une poudre magnétique à base d'oxyde de fer, et la force coercitive H$_{c2}$ se situe dans un intervalle de 19894 à 39789 A/m (de 250 à 500 Oe).

3. Support d'enregistrement magnétique selon la revendication 1, où ladite deuxième couche magnétique est formée par dépôt d'une poudre magnétique du type à revêtement par un composé de Co ou d'une poudre magnétique à base d'oxyde de fer du type à revêtement par un composé de Fe et Co, et la force coercitive H$_{c2}$ se situe dans un intervalle de 23873 à 71619 A/m (de 300 à 900 Oe).

4. Support d'enregistrement magnétique selon la revendication 1, ou l'aire superficielle massique de la poudre magnétique formant ladite deuxième couche magnétique selon la méthode d'adsorption BET se situe dans un intervalle de 28 à 45 m$^2$/g.

5. Support d'enregistrement magnétique selon la revendication 1, où l'épaisseur de ladite première couche se situe dans un intervalle de 2 à 6 µm.

**0 090 053**

6. Support d'enregistrement magnétique selon la revendication 1, où l'épaisseur de ladite deuxième couche magnétique est choisie dans un intervalle de 0,2 à 2 µm.

7. Support d'enregistrement magnétique selon la revendication 1, où ladite poudre magnétique à base d'oxyde de fer est $Fe_2O_3$ Y.

7

FIG. 1

FIG. 2

FIG. 3A

| Characteristics of Single-Layer Magnetic Recording Medium | | | | | | | |
|---|---|---|---|---|---|---|---|
| | Magnetic Paint | Magnetic Film Thick-ness (μ) | Br (Gauss) | Hc (Oersted) | MOL (db) | | Bias Noise |
| | | | | | 315Hz | 10KHz | (db) |
| Example of Single-Layer (1) | A | 6 | 1500 | 300 | 0 | 0 | 0 |
| ⁄ (2) | A | 5 | 1500 | 300 | −0.7 | 0 | 0 |
| ⁄ (3) | A | 4 | 1500 | 300 | −1.5 | 0 | 0 |
| ⁄ (4) | B | 6 | 1700 | 300 | +2.0 | 0 | +1.0 |
| ⁄ (5) | B | 5 | 1700 | 300 | +1.3 | 0 | +1.0 |
| ⁄ (6) | B | 4 | 1700 | 300 | +0.5 | 0 | +1.0 |
| ⁄ (7) | C | 6 | 1900 | 280 | +4.0 | 0 | +2.0 |
| ⁄ (8) | C | 5 | 1900 | 280 | +3.3 | 0 | +2.0 |
| ⁄ (9) | C | 4 | 1900 | 280 | +2.5 | 0 | +2.0 |
| ⁄ (10) | D | 6 | 1900 | 380 | +3.0 | +2.0 | +2.0 |
| ⁄ (11) | D | 4 | 1900 | 380 | +1.5 | +2.0 | +2.0 |
| ⁄ (12) | E | 6 | 1700 | 280 | +2.0 | 0 | −1.5 |
| ⁄ (13) | E | 4 | 1700 | 280 | +0.5 | 0 | −1.5 |
| ⁄ (14) | F | 6 | 1700 | 380 | +1.0 | +2.0 | −1.5 |

0 090 053

*FIG. 3B*

| | | | | | | | | |
|---|---|---|---|---|---|---|---|---|
| ✓ | (15) | F | 4 | 1700 | 380 | −0.5 | +2.0 | −1.5 |
| ✓ | (16) | G | 6 | 1700 | 480 | +0.5 | +4.0 | −1.5 |
| ✓ | (17) | G | 4 | 1700 | 480 | −1.5 | +4.0 | −1.5 |
| ✓ | (18) | H | 6 | 1500 | 300 | 0 | 0 | −3.0 |
| ✓ | (19) | H | 4 | 1500 | 300 | −1.5 | 0 | −3.0 |
| ✓ | (20) | I | 6 | 1500 | 400 | −1.0 | +2.0 | −3.0 |
| ✓ | (21) | I | 4 | 1500 | 400 | −2.5 | +2.0 | −3.0 |
| ✓ | (22) | J | 6 | 1500 | 500 | −2.0 | +4.0 | −3.0 |
| ✓ | (23) | J | 4 | 1500 | 500 | −3.5 | +4.0 | −3.0 |
| ✓ | (24) | K | 6 | 1700 | 480 | 0 | +4.0 | −1.5 |
| ✓ | (25) | K | 4 | 1700 | 480 | −1.5 | +4.0 | −1.5 |
| ✓ | (26) | L | 6 | 1700 | 680 | 0 | +6.0 | −1.5 |
| ✓ | (27) | L | 4 | 1700 | 680 | −1.5 | +6.0 | −1.5 |
| ✓ | (28) | M | 6 | 1700 | 880 | −1.5 | +10.0 | −1.5 |
| ✓ | (29) | M | 4 | 1700 | 880 | −3.0 | +10.0 | −1.5 |
| ✓ | (30) | N | 6 | 1500 | 480 | −2.0 | +4.0 | −3.0 |
| ✓ | (31) | N | 4 | 1500 | 480 | −3.5 | +4.0 | −3.0 |
| ✓ | (32) | O | 6 | 1500 | 680 | −1.5 | +6.0 | −3.0 |
| ✓ | (33) | O | 4 | 1500 | 680 | −3.0 | +6.0 | −3.0 |
| ✓ | (34) | P | 6 | 1500 | 880 | −3.0 | +10.0 | −3.0 |
| ✓ | (35) | P | 4 | 1500 | 880 | −4.5 | +10.0 | −3.0 |

# FIG. 4A

FIG. 4A

FIG. 4B

| Characteristics of Double-Layer Magnetic Recording Medium | | | | | | | |
|---|---|---|---|---|---|---|---|
| | Upper Layer | | Under Layer | | MOL (db) | | Bias Noise |
| | Magnetic Paint | Thickness (μ) | Magnetic Paint | Thickness (μ) | 315Hz | 10KHz | (db) |
| Examples (1) | F | 1 | B | 5 | +1.3 | +2.0 | −1.5 |
| " (2) | F | 2 | B | 4 | +0.5 | +2.0 | −1.5 |
| " (3) | G | 1 | B | 5 | +1.3 | +4.0 | −1.5 |
| " (4) | G | 2 | B | 4 | +0.5 | +4.0 | −1.5 |
| " (5) | I | 1 | B | 5 | +1.3 | +2.0 | −3.0 |
| " (6) | I | 2 | B | 4 | +0.5 | +2.0 | −3.0 |
| " (7) | J | 1 | B | 5 | +1.3 | +4.0 | −3.0 |
| " (8) | J | 2 | B | 4 | +0.5 | +4.0 | −3.0 |
| " (9) | F | 1 | C | 5 | +3.3 | +2.0 | −1.5 |
| " (10) | F | 2 | C | 4 | +2.5 | +2.0 | −1.5 |
| " (11) | G | 1 | C | 5 | +3.3 | +4.0 | −1.5 |
| " (12) | G | 2 | C | 4 | +2.5 | +4.0 | −1.5 |
| " (13) | I | 1 | C | 5 | +3.3 | +2.0 | −3.0 |

FIG. 4B

| | | | | | | | | |
|---|---|---|---|---|---|---|---|---|
| · | (14) | I | 2 | C | 4 | +2.5 | +2.0 | −3.0 |
| · | (15) | J | 1 | C | 5 | +3.3 | +4.0 | −3.0 |
| · | (16) | J | 2 | C | 4 | +2.5 | +4.0 | −3.0 |
| · | (17) | G | 1 | D | 5 | +2.5 | +4.0 | −1.5 |
| , | (18) | J | 1 | D | 5 | +2.5 | +4.0 | −3.0 |
| , | (19) | K | 1 | C | 5 | +3.3 | +4.0 | −1.5 |
| , | (20) | K | 2 | C | 4 | +2.5 | +4.0 | −1.5 |
| , | (21) | N | 1 | C | 5 | +3.3 | +4.0 | −3.0 |
| , | (22) | N | 2 | C | 4 | +2.5 | +4.0 | −3.0 |
| , | (23) | L | 1 | C | 5 | +3.3 | +6.0 | −1.5 |
| , | (24) | L | 2 | C | 4 | +2.5 | +6.0 | −1.5 |
| , | (25) | O | 1 | C | 5 | +3.3 | +6.0 | −3.0 |
| , | (26) | O | 2 | C | 4 | +2.5 | +6.0 | −3.0 |
| , | (27) | K | 1 | D | 5 | +1.3 | +4.0 | −1.5 |
| , | (28) | K | 2 | D | 4 | +0.5 | +4.0 | −1.5 |
| , | (29) | N | 1 | D | 5 | +1.3 | +4.0 | −3.0 |
| , | (30) | N | 2 | D | 4 | +0.5 | +4.0 | −3.0 |
| , | (31) | P | 1 | C | 5 | +3.3 | +10.0 | −3.0 |
| , | (32) | P | 2 | C | 4 | +2.5 | +10.0 | −3.0 |